# EUROPEAN PATENT SPECIFICATION

(11) **EP 2 440 445 B1**
(45) Date of publication and mention of the grant of the patent: **06.11.2013**
(21) Application number: 10723589.7
(22) Date of filing: 07.06.2010
(51) Int. Cl.: B62K 21/12, B62K 21/26

(54) **BICYCLE HANDLEBAR**
FAHRRADLENKER
GUIDON DE BICYCLETTE

(30) Priority: 10.06.2009 IT MI20091026
(43) Date of publication of application: 18.04.2012
(73) Proprietor: Medical Dynamix S.R.L., 20124 Milano (IT)
(72) Inventor: LANZETTA, Marco, I-20052 Monza (IT)
(74) Representative: Vanosi, Adelio Valeriano
(86) International application number: PCT/EP2010/057918
(87) International publication number: WO 2010/142638

(56) References cited:
- AT-B- 353 617
- DE-A1- 2 754 531
- DE-A1- 3 134 578
- FR-A1- 2 326 324
- US-A- 4 403 787
- US-A1- 2007 137 410

## Description

The present invention relates to a handlebar for vehicles, in particular bicycles, with a covering provided on a gripping region of said handlebar Handlebars for vehicles such as bicycles or the like are currently formed by a metal or carbon frame covered in same parts of substantially rubbery plastic material or sponge plastic.

Sponge plastic is known to perfectly assume the shape of the user, but provides a degree of shock absorption which is totally insufficient.

On the other hand, grips made of substantially rigid rubbery material have excellent shock absorption capacity, but difficultly adapt to the shape of the user's hand. In practice, although more comfortable from the shock absorption viewpoint, they can stress certain points of the user's hand in a manner non-uniformly relative to other points, to hence result in physical damage which with time can also become serious and permanent.

This problem is particularly felt in extreme use situations, for example in downhill descents with mountain bikes. These descents generate considerable stress in the hands of a descent cyclist, as the bicycle usually travels at very high speed on extremely uneven ground often full of stones or pebbles.

In particular, incorrect positioning of the hands on the handlebar associated with vibration and shocks can give rise for example to: nervous compression syndrome (typical of the cyclist), neuropathy, paresis of the ulnar nerve, paresthesia of the fingers and thumb, tendonitis by prolonged force, functional overload syndrome, muscular cramps due to incorrect posture. articular pains, post force fatigue with difficulty in recovery.

DE2754531-A1, US2007/137410-A1, AT 353617-B, DE 3134578-A1, FR2326324-A1, and US4403787-A, describe different types of handlebars known in the art.

An object of the present invention is to provide a handlebar for vehicles with a covering on the gripping region which enable the user to achieve a better degree of shock absorption of the vibrations transmitted to the hands, and to prevent incorrect hand positioning, hence preventing the user suffering pathologies.

This and other objects are attained by providing a handlebar for vehicles in accordance with the technical teachings of the accompanying claims. Further characteristics and advantages of the invention will be apparent from the description of a preferred but non-exclusive embodiment of the kit and handlebar, illustrated by way of non-limiting example in the accompanying drawings, in which:
Figures 1 and 2 show two different embodiments of the handlebar according to the present invention;
Figure 3 is a side view of a part of the handlebar of Figure 2;
Figures 4, 7 and 8 are side sections through parts of the handlebar of Figures 1 and 2;
Figure 5 shows a detail of the handlebar of Figure 1;
Figure 6 shows a seat provided in the handlebar, in which shock absorption parts or inserts of the present invention can be housed;
Figure 9 and Figure 10 are perspective views taken from different angles showing a kit that can be applied to the handlebar of the present invention;
Figure 11A shows another enlarged detail of the kit of Figure 9 before application to the handlebar;
Figure 11B shows the detail of Figure 11A folded into the position assumed when fixed to the handlebar;
Figure 12 shows an enlarged detail of the kit of Figure 9, before application to the handlebar;
Figure 13 shows a further detail of the kit when about to be applied to an elkhorn portion of a handlebar;
Figure 14 shows an embodiment of an elkhorn handlebar;
Figure 15 and 16 show the left portion of the handlebar of figure 14, before and after having applied to the frame of the shock absorption parts or inserts.

With reference to said figures, these show an elkhorn handlebar indicated overall by the reference numeral 1.

It comprises a frame 2 formed of metal, light metal alloys or preferably carbon fibre. The frame 2 is substantially of T shape with a portion 2A for connection to the vehicle steering mechanism, and a pair of support portions 2B for the vehicle user's hands.

Each portion 2B presents an elkhorn curved end part 2C, as commonly known in bicycle handlebars, in particular racing bicycles. This portion 2C can also not be present, as is commonly the case with mountain bikes.

In a gripping region 3 of each portion 2B, the handlebar of the figure comprises a first shock absorption part (or insert) 4 for supporting the sensitive ends of the thumb, and a second shock absorption part or insert 5 for supporting the wrist joint. The parts 4 and 5 are made of any form memory material, or in any event able to dampen the impacts transmitted by the handlebar to the hand. Purely by way of example, the material in question is expanded polyurethane gel. The parts 4 and 5 are fixed to the frame by a technical adhesive 8 suitable for the purpose. The type of adhesive depends on the handlebar construction material.

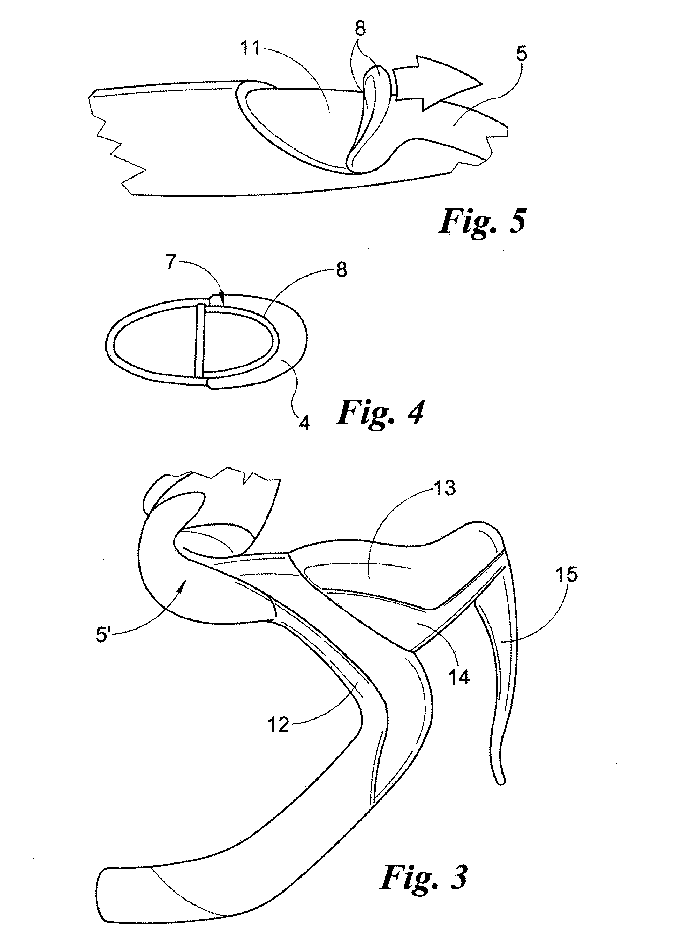

Preferably, to improve the positioning of the inserts 4 and 5 and their stability, the handlebar 1 comprises sunken seats 7 or recesses (see Figures 4, 6, 7 and 8) having a perimetral shape similar to the shape of the inserts. The shock absorption inserts are housed in the sunken seats, and their positioning is more stable during use. In this respect, the inserts are housed in the seats but project therefrom in height. By way of example, the depth of each seat or recess is about 2 millimetres, but can vary according to requirements.

Advantageously the seats present one or more trough hole 7A realized in the structural part (frame) of the handlebar. The through-hole 7A is at least partially filled with the material forming said shock absorption part in order to safely fix it to the frame. In particular if the shock absorption part is made of a polimeric cast material, as in case of a form memory material, it can be directly casted or formed in and around the seat while the material is melted, allowing part of the fluid material to expand in the trough hole, thus safely gripping the polimeric shock absorption part to the frame.

Alternatively the seat can be defined by said through-hole completely filled of polymeric material. During the cast some forming parts can be inserted in a cavity of the frame beneath the through-hole, to help the distribution and positioning of the melted polymeric material until its solidification.

As can be seen from the figures, the first shock absorption insert 4 has a greater cross-section and a large resting surface for the user's hand, in contrast to that of handles and handlebars of the known art.

In particular, in the embodiment of the invention the handlebar presents a cross-section enlargement precisely at the first shock absorption part 4. The enlargement is such as to provide a comfortable support for a large part of that hand portion between the connection of the first phalanx of the thumb and the connection of the first phalanx of the index finger. The said hand portion rests on the first shock absorption part to the extent of between 70% and 90% of its surface.

The second shock absorption part 5 also presents a very large surface for supporting the hand.

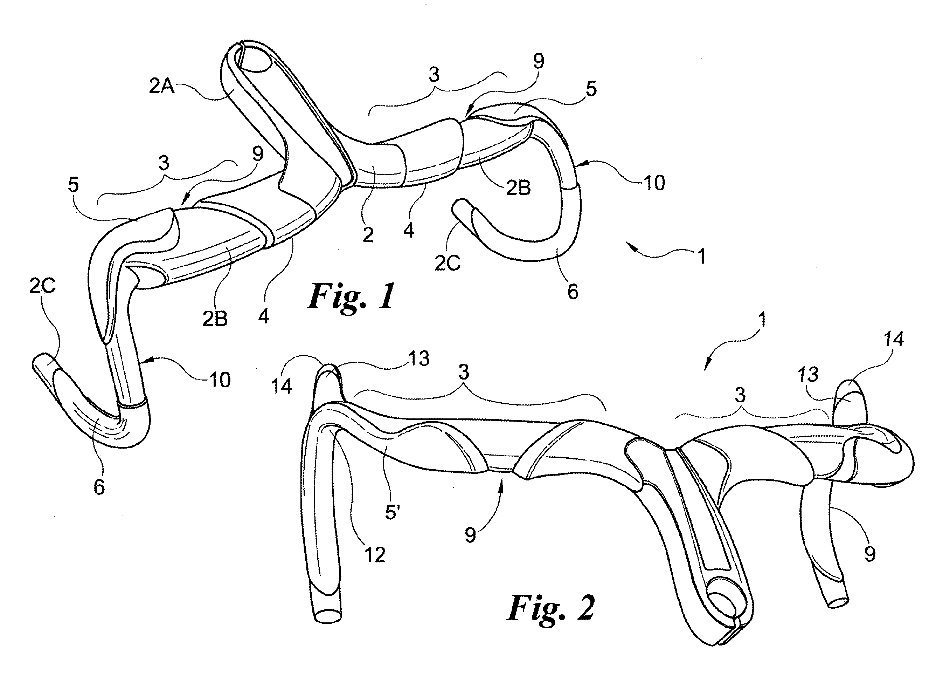

Advantageously, as again visible in Figure 1, between the first and second shock absorption part 4, which are raised from the handlebar surface, a "bare" handlebar part is provided, this hence being of lesser height than the shock absorption parts 4 and 5.

At the elkhorn curved end parts 2C, the handlebar of Figure 1 comprises a third shock absorption part (or insert) 6 for supporting the sensitive thumb ends. This part or insert is also made of form memory material able to provide shock absorption for the gripping regions, such as expanded polyurethane gel.

In the present embodiment a bare handlebar part 10 is provided between the second and third shock absorption part.

In the above illustrated embodiment and in the next, the form memory material can be of any known type, preferably polyurethane gel which, given its form memory capacity, adapts perfectly to the user's hand, hence increasing the contact surface along which the handlebar vibrations are discharged. This improves steering comfort.

In particular, the anatomical design of the inserts and the increased handlebar surface reduce the pressure on each hand contact point and above all in the area of the ulnar nerve, hence decreasing the probability of numbness. Moreover, the two inserts and the "bare part" 9 of the handlebar prevent incorrect hand positioning, which could result in overloading of the median nerve. In particular, the recesses filled with soft form memory material are able to dampen impacts to the cyclist's wrist, hand and fingers, while at the same time attenuating manual forces during use.

In the embodiment shown in Figure 2 those parts analogous to the preceding embodiment will not be further described, they being indicated by the same reference numerals.

The differences from that already described relate substantially to the fact that the second part or insert 5' extends without discontinuity as far as the portion occupied by the third part 6 of the preceding embodiment. Essentially the part or insert 5' is the combination of the previously described second and third shock absorption part, connected by a connection piece 12 provided on the inside of the bare part 10 of the preceding embodiment (see Figure 3).

In this embodiment a fourth shock absorption part 13 is advantageously provided (visible in Figure 3) also made of expanded polyurethane gel, positioned on the top of the supports 14 to which the brake levers are hinged. In particular the fourth shock absorption part 13 acts as a support covering for the brake lever.

This fourth part can also be provided in a similar position (i.e. above the support 14 for the brake lever 15) in the preceding embodiment. According to the present invention all or at least one of the shock absorption parts or inserts of each embodiment are housed in suitable seats 7 (or recesses), such as those described in the first embodiment. The absorption parts can form a replacement kit applicable to handlebars. The kit essentially comprises a first shock absorption part 4' for supporting the sensitive thumb ends and a second shock absorption part 5' for supporting the wrist joint; both parts are made of any form memory material such as expanded polyurethane gel.

In particular, the first shock absorption part 4' has a size such as to provide a support for a large part of that hand portion between the connection of the first phalanx of the thumb and the connection of the first phalanx of the index finger.

It is of substantially elongate shape (of strip form) with the widened part 15 disposed centrally and extending only from one side along the strip. It also presents a thin raised region 16 of greater thickness for laterally containing the hand. The raised region 16 faces the entire region comprising the thickening.

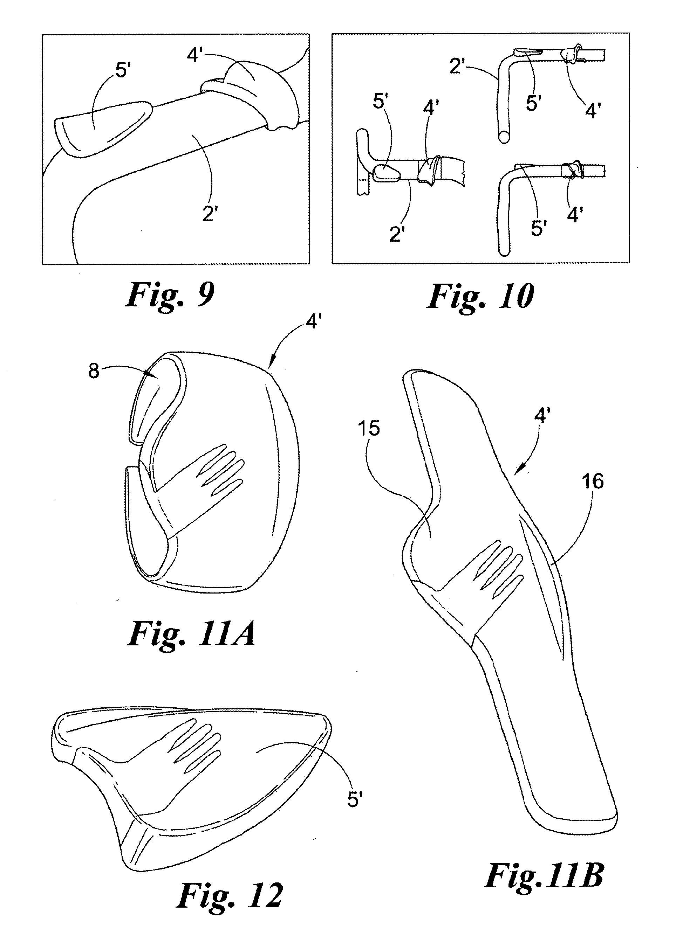

When the strip is applied to the handlebar it at least partially wraps the handlebar, as visible in Figures 9 and 10, and in Figure 11A (in which the handlebar is not shown).

The second shock absorption part 5' is of substantially triangular shape (equilateral triangle) with a concave upper surface rising perimetrally on its external side. This raised part contains the hand when placed thereon.

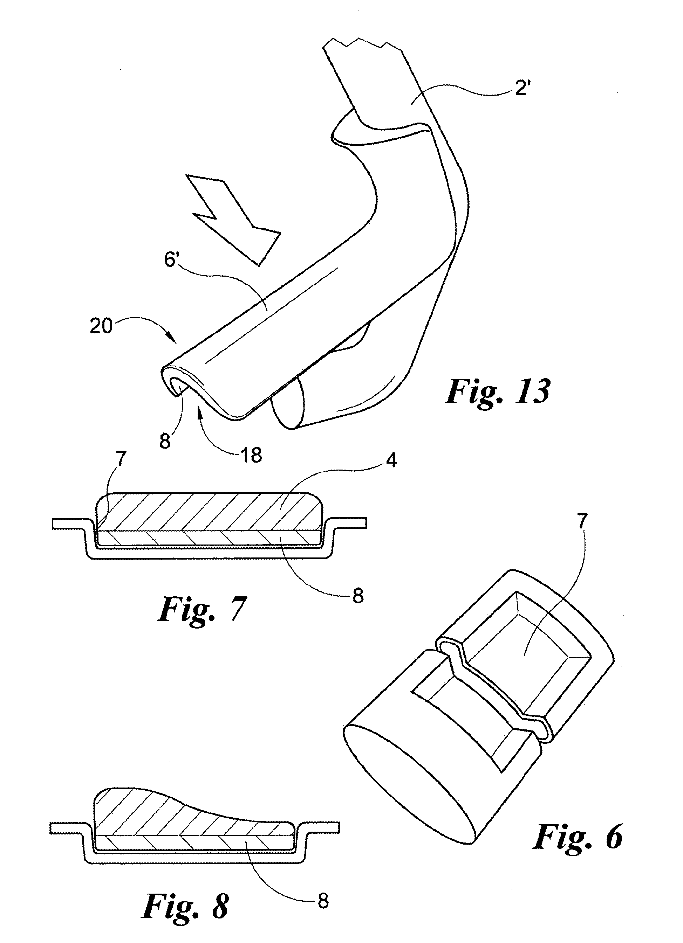

Advantageously the kit can also comprise a third shock absorption part 6' made of a form memory material such as expanded polyurethane gel (^{R}) adapted to be positioned on the handlebar in a position corresponding with the inner elkhorn portion of this latter (see Figure 13). It enables the sensitive thumb ends to be supported and presents a substantially elongate shape, a concavity 18 disposed on the inner side and an accentuated hump 20 on the outer face. The thickness (height of the hump) of the third part decreases from one end to the opposite end, as visible in Figure 13.

The kit can also comprise a fourth shock absorption part (not shown) also made of form memory material (^{R}), to be positioned on the of the supports 14 to which the brake levers are hinged The shock absorption parts described in all the above embodiments are fixed to the handlebar by a technical adhesive applied to the lower surface of each of them.

Various embodiments of the invention have been described, however others can be devised using the same inventive concept as defined in the appended claims. In particular an important and preferential characteristic of the invention is that the aforedescribed shock absorption parts are made of form memory material ^{R}.

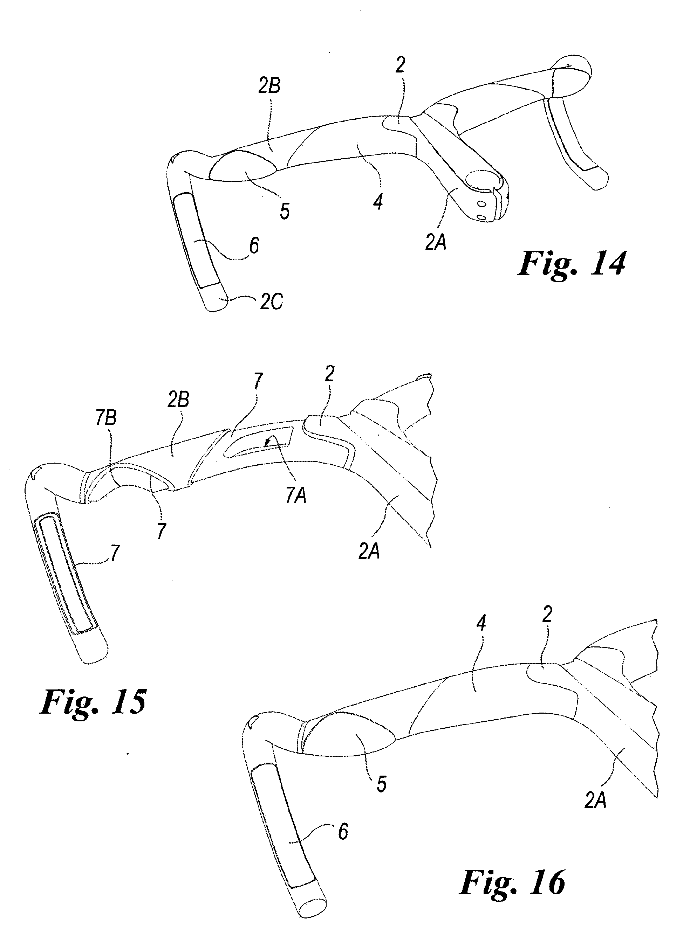

Figures 14 to 16 show a different embodiment of the present invention. In the figures the same reference numbers used above are now used to identify functionally correspondent parts of the handlebar.

Here the polymeric material of which shock absorption part are formed, is casted directly in the seats 7 (see fig 15 - 16 before and after the casting). Advantageously the polymeric material is casted in moulds formed around the handlebar and surrounding the seats. The polymeric material polymerizes and expands in the seats 7, that can also presents through holes 7A, as can be seen in fig 15. The seats can also comprise recesses 7B in order to allow a greater quantity of shock absorption material to be placed in some points of the handlebar that need particular degrees of shock-absorption.

## Claims

1. A handlebar (1) for vehicles, with two gripping regions (3) for the vehicle user's hands, each gripping region comprising a first shock absorption part (4) for supporting the sensitive ends of the thumb and a second shock absorption part (5) for supporting the wrist joint, the handlebar presenting cross-section enlargements at least in a position corresponding with the first shock absorption parts (4), each enlargement being such as to provide a support for a large part of the hand portion between the connection of the first phalanx of the thumb and the connection of the first phalanx of the index finger, **characterized in that** at least two sunken seats (7,11) are present, housing the respective first and second shock absorption parts which project therefrom in height, the at least two sunken seats laterally containing the respective first and second shock absorption parts and having a perimetric shape similar to that of the respective first and second shock absorption parts housed into them so as to improve the positioning and the stability of the first and second shock absorption parts.

2. A handlebar as claimed in the preceding claim, wherein a third shock absorption part (6, 6') is present for supporting the sensitive thumb ends, positioned on an inner side of an elkhorn curved part (2C) of the handlebar.

3. A handlebar as claimed in the preceding claim, wherein said third shock absorption part (6) is of a substantially elongate shape, and it is provided with a concavity (18) disposed on its inner side which is positioned on the handlebar and with an accentuated hump on an outer face opposed to the inner side, the thickness of the third shock absorption part decreasing from one end to the opposite end.

4. A handlebar as claimed in claim 1, wherein a fourth shock absorption part (13) is present, positioned on the top of a projecting portion to which a brake lever is hinged.

5. A handlebar as claimed in claim 1, wherein said first and second shock absorption parts (4,5) are formed as separate pieces or as a single piece.

6. A handlebar as claimed in claim 2, wherein said third shock absorption part is housed in its own seat and/or each first shock absorption part is housed in its own seat, or one of said second shock absorption parts and said third shock absorption part are formed as a single piece and housed in a single seat.

7. A handlebar as claimed in claim 1, wherein a handlebar portion free (9) of covering is provided between said first and second sh+ock absorption parts, said portion being of lesser height than said first and second parts.

8. A handlebars as claimed in claim 1, **characterized in that** each of said at least two sunken seats (7,11) presents a trough hole realized in a structural part of the handlebar, said through-hole being at least partially filled with the material forming the respective shock absorption part housed into it.

9. A handlebar as claimed in the preceding claim, **characterized in that** each of said at least two sunken seats (7,11) is defined by said through-hole.

10. A handlebar as claimed in one or more of the preceding claims, wherein said shock absorption parts have a lower surface provided with technical adhesive (8), for fixing to said handlebar.

11. A handlebar as claimed in one or more of the preceding claims, wherein said shock absorption parts are formed of a form memory material.

## Patentansprüche

1. Lenker (1) für Fahrzeuge mit zwei Griffbereichen (3) für die Hände des Benutzers des Fahrzeuges, wobei jeder Griffbereich ein erstes Stoßdämpfungselement (4) zum Stützen der empfindlichen Enden des Daumens und ein zweites Stoßdämpfungselement (5) zum Stützen des Handgelenks aufweist, wobei der Lenker Vergrößerungen des Querschnitts zumindest in einer Position in Verbindung mit den ersten Stoßdämpfungselementen (4) aufweist, wobei jede Vergrößerung derart ausgestaltet ist, dass sie zum Stützen eines großen Teils des Handbereichs zwischen der Verbindung des ersten Glieds des Daumens und der Verbindung des ersten Glieds des Zeigefingers dient, **dadurch gekennzeichnet, dass** mindestens zwei versenkte Sitze (7, 11) vorhanden sind, die jeweils die ersten und zweiten Stoßdämpfungselemente aufnehmen, die daraus der Höhe nach herausragen, wobei die mindestens zwei versenkten Sitze jeweils die ersten und zweiten Stoßdämpfungselemente lateral umfassen und eine Umfangsform aufweisen, die der der jeweils ersten und zweiten Stoßdämpfungselemente, die sie aufnehmen, derart entspricht, um die Positionierung und die Stabilität der ersten und zweiten Stoßdämpfungselemente zu verbessern.

2. Lenker nach dem vorhergehenden Anspruch, wobei ein drittes Stoßdämpfungselement (6, 6') zum Stützen der empfindlichen Enden des Daumens vorhanden ist, das an einer Innenseite eines wie ein Horn gebogenen Elements (2C) des Lenkers positioniert ist.

3. Lenker nach dem vorhergehenden Anspruch, wobei das dritte Stoßdämpfungselement (6) eine im Wesentlichen längliche Form und eine Höhlung (18) auf der Innenseite aufweist, die an dem Lenker positioniert ist und einen akzentuierten Höcker an einer Außenfläche gegenüber der Innenseite aufweist, wobei die Dicke des dritten Stoßdämpfungselements von einem Ende zum entgegengesetzten Ende hin abnimmt.

4. Lenker nach Anspruch 1, wobei ein viertes Stoßdämpfungselement (13) vorhanden ist, das an der Oberseite eines vorstehenden Abschnitts, an dem ein Bremshebel drehbar befestigt ist, positioniert ist.

5. Lenker nach Anspruch 1, wobei die ersten und zweiten Stoßdämpfungselemente (4,5) als separate Teile oder einstückig ausgebildet sind.

6. Lenker nach Anspruch 2, wobei das dritte Stoßdämpfungselement in einem eigenen Sitz aufgenommen ist und/oder jedes erstes Stoßdämpfungselement in einem eigenen Sitz aufgenommen ist, oder eines der zweiten Stoßdämpfungselemente und das dritte Stoßdämpfungselement einstückig ausgebildet sind und in einem einzelnen Sitz aufgenommen sind.

7. Lenker nach Anspruch 1, wobei ein Lenkerabschnitt ohne (9) Abdeckung zwischen den ersten und zweiten Stoßdämpfungselementen vorgesehen ist, wobei der Abschnitt von geringerer Höhe ist als die ersten und zweiten Elemente.

8. Lenker nach Anspruch 1, **dadurch gekennzeichnet, dass** jeder der mindestens zwei versenkten Sitze (7, 11) ein Durchgangsloch aufweist, das in einem Strukturelement des Lenkers ausgebildet ist, wobei das Durchgangsloch zumindest teilweise mit dem Material gefüllt ist, aus dem das jeweilige Stoßdämpfungselement, das darin aufgenommen ist, ausgebildet ist.

9. Lenker nach dem vorhergehenden Anspruch, **dadurch gekennzeichnet, dass** jeder der mindestens zwei versenkten Sitze (7, 11) durch das Durchgangsloch definiert ist.

10. Lenker nach einem oder mehreren der vorhergehenden Ansprüche, wobei die Stoßdämpfungselemente eine untere Fläche mit einem technischen Haftmittel (8) zur Befestigung an dem Lenker aufweisen.

11. Lenker nach einem oder mehreren der vorhergehenden Ansprüche, wobei die Stoßdämpfungselemente aus einem FormGedächtnis-Material geformt sind.

## Revendications

1. Guidon (1) pour véhicules, avec deux régions de préhension (3) pour les mains de l'utilisateur du véhicule, chaque région de préhension comprenant une première partie d'amortissement de choc (4) pour supporter les extrémités sensibles du pouce et une deuxième partie d'amortissement de choc (5) pour supporter l'articulation du poignet, le guidon présentant des élargissements en coupe transversale au moins à une position correspondant aux premières parties d'amortissement de choc (4), chaque élargissement étant apte à fournir un support pour une grande partie de la portion de main entre la liaison de la première phalange du pouce et la liaison de la première phalange de l'index, **caractérisé en ce qu'**au moins deux sièges renfoncés (7, 11) sont présents, logeant les première et deuxième parties d'amortissement de choc respectives qui font saillie en hauteur à partir de ceux-ci, les au moins deux sièges renfoncés contenant latéralement les première et deuxième parties d'amortissement de choc respectives et ayant une forme périmétrique similaire à celle des première et deuxième parties d'amortissement de choc respectives logées dans ceux-ci afin d'améliorer le positionnement et la stabilité des première et deuxième parties d'amortissement de choc.

2. Guidon selon la revendication précédente, dans lequel une troisième partie d'amortissement de choc (6, 6') est présente pour supporter les extrémités sensibles du pouce, positionnée sur un côté intérieur d'une partie en forme de corne de cerf (2C) du guidon.

3. Guidon selon la revendication précédente, dans lequel ladite troisième partie d'amortissement de choc (6) a une forme sensiblement allongée et elle est pourvue d'une concavité (18) disposée sur son côté intérieur qui est positionnée sur le guidon et d'une bosse accentuée sur une face extérieure opposée au côté intérieur, l'épaisseur de la troisième partie d'amortissement de choc diminuant d'une extrémité à l'extrémité opposée.

4. Guidon selon la revendication 1, dans lequel une quatrième partie d'amortissement de choc (13) est présente, positionnée au sommet d'une portion en saillie à laquelle un levier de frein est relié en charnière.

5. Guidon selon la revendication 1, dans lequel lesdites première et deuxième parties d'amortissement de choc (4, 5) sont constituées sous forme de pièces distinctes ou sous forme d'une pièce unique.

6. Guidon selon la revendication 2, dans lequel ladite troisième partie d'amortissement de choc est logée dans son propre siège et/ou chaque première partie d'amortissement de choc est logée dans son propre siège, ou l'une desdites deuxièmes parties d'amortissement de choc et ladite troisième partie d'amortissement de choc sont constituées sous forme d'une pièce unique et sont logées dans un siège unique.

7. Guidon selon la revendication 1, dans lequel une portion de guidon (9) dépourvue de revêtement est fournie entre ladite première partie d'amortissement de choc et ladite deuxième partie d'amortissement de choc, ladite portion ayant une hauteur inférieure à celle de ladite première partie et de ladite deuxième partie.

8. Guidon selon la revendication 1, **caractérisé en ce que** chacun desdits au moins deux sièges renfoncés (7, 11) présente un trou traversant réalisé dans une partie structurelle du guidon, ledit trou traversant étant au moins partiellement rempli par la matière constituant la partie d'amortissement de choc respective logée dans celui-ci.

9. Guidon selon la revendication précédente, **caractérisé en ce que** chacun desdits au moins deux sièges renfoncés (7, 11) est défini par ledit trou traversant.

10. Guidon selon une ou plusieurs des revendications précédentes, dans lequel lesdites parties d'amortissement de choc ont une surface inférieure pourvue d'un adhésif technique (8), pour une fixation au dit guidon.

11. Guidon selon une ou plusieurs des revendications précédentes, dans lequel lesdites parties d'amortissement de choc sont constituées d'une matière à mémoire de forme.
